# EUROPÄISCHE PATENTSCHRIFT

(11) **EP 2 736 372 B1**
(45) Veröffentlichungstag und Bekanntmachung des Hinweises auf die Patenterteilung: **28.10.2015**
(21) Anmeldenummer: 12741306.0
(22) Anmeldetag: 24.07.2012
(51) Int. Cl.: A45C 11/00

(54) **SICHERHEITSGEHÄUSE FÜR EINEN TRAGBAREN COMPUTER**
SECURE HOUSING FOR A PORTABLE COMPUTER
BOÎTIER DE SÉCURITÉ POUR UN ORDINATEUR PORTABLE

(30) Priorität: 29.07.2011 DE 202011103813 U
(43) Veröffentlichungstag der Anmeldung: 04.06.2014
(73) Patentinhaber: Lufthansa Systems GmbH & Co. KG, 65479 Raunheim (DE)
(72) Erfinder: HOMMEL, Peter, 61348 Bad Homburg (DE); LIEBE, Jörg, 65191 Wiesbaden (DE)
(74) Vertreter: Von Kreisler Selting Werner - Partnerschaft von Patentanwälten und Rechtsanwälten mbB
(86) Internationale Anmeldenummer: PCT/EP2012/064500
(87) Internationale Veröffentlichungsnummer: WO 2013/017477

(56) Entgegenhaltungen:
- WO-A2-2004/102336
- DE-U1- 20 307 127
- US-A1- 2008 283 114

## Beschreibung

Die Erfindung betrifft ein Sicherheitsgehäuse für einen tragbaren Computer, wie z. B. einen Tablet-Computer mit einem Touchscreen.

Bei einer Beherbergung oder Beförderung von Personen, wie z. B. auf einer Flugreise, ist es wünschenswert, den Personen einen tragbaren Computer, vorzugsweise in Form eines Tablet-Computers mit Touchscreen, wie z. B. einem iPad, leihweise auszuhändigen. Im Fall einer Flugreise sollen die Fluggäste mit Hilfe des Leihcomputers auf ein bordeigenes Unterhaltungsnetzwerk zugreifen können, um Filme, die auf einem zentralen Netzwerkserver gespeichert sind, anschauen zu können. Hierbei können die Leihcomputer mit dem Netzwerkserver eine Funkverbindung, beispielsweise per W-LAN unterhalten. Alternativ oder ergänzend ist auch denkbar, dass Filme oder wiederzugebende Musik auf dem Leihcomputer gespeichert sind und von diesem aus abrufbar sein sollen.

Ein Zugriff auf Grundeinstellungen des Leihcomputers und die dort hinterlegten Film- und Musikdaten soll verhindert werden. Zudem soll die Gefahr einer Beschädigung des Computers vermieden sein.

DE 20 307 127 U1 offenbart einen Computerbehälter mit den Merkmalen des Oberbegriffs von Anspruch 1.

Das erfindungsgemäße Sicherheitsgehäuse wird definiert durch Anspruch 1. Anspruch 8 definiert die Kombination aus einem tragbaren Computer mit dem erfindungsgemäßen Sicherheitsgehäuse.

Das Sicherheitsgehäuse ist von einem geöffneten Zustand in einen geschlossenen Zustand überführbar und im geschlossenen Zustand abschließbar. Im geschlossenen Zustand verdeckt das Gehäuse mindestens eine Bedientaste des Computers und gibt dessen Bildschirm frei. Die verdeckte Bedientaste kann ein Hauptbedienknopf sein, mit dessen Hilfe Grundeinstellungen des Computers vorgenommen werden. Dadurch dass diese Bedientaste im geschlossenen Zustand verdeckt wird, ist ein Zugriff auf die Bedientaste und somit ein Zugriff auf Grundeinstellungen des Computers verhindert. Durch den freigegebenen Bildschirm können dennoch Filme oder andere Daten visuell wiedergegeben werden. Der Benutzer kann den tragbaren Computer verwenden, um auf dem Bildschirm Informationen, wie beispielsweise Filme oder Texte, zu betrachten, wobei die Bedienung des Computers und insbesondere die Vornahme von Änderungen der Grundeinstellungen eingeschränkt ist.

Das Sicherheitsgehäuse weist einen von außerhalb des Gehäuses zugänglichen elektrischen Steckkontakt mit einem elektrischen Kabel auf, welches mit der Steckbuchse des Computers verbindbar ist. Die Steckbuchse des Computers ist dann im verschlossenen Zustand des Sicherheitsgehäuses geschützt und dennoch von außen über den elektrischen Steckkontakt und das elektrische Kabel zugänglich. Hierbei sind das Kabel und der Steckkontakt im geschlossenen Zustand des Gehäuses vorzugsweise vollständig in dem Gehäuse enthalten, so dass die Gefahr einer mechanischen Beschädigung des Kabels und/oder des Steckkontakts vermieden ist.

Von besonderem Vorteil ist es, wenn das Kabel ausschließlich zu einer Spannungsversorgung des Computers ausgebildet ist und keine Datenleitung ermöglicht. An tragbaren Tablet-Computern, wie z. B. dem iPad, sind elektrische Steckbuchsen typischerweise zur Spannungsversorgung des Computers und zur Übertragung von Daten als Datenschnittstelle ausgebildet. Der Benutzer kann bei geschlossenem Gehäuse den Computer mit elektrischer Spannung versorgen ohne Daten von dem Computer herunterladen zu können oder Daten auf den Computer übertragen zu können. Vorzugsweise sind alle Datenschnittstellen, wie z. B. USB-Ports, des Computers im geschlossenen Zustand des Sicherheitsgehäuses nicht zugänglich oder zumindest nicht zu einer Datenübertragung nutzbar. Auf diese Weise können auf dem Leihcomputer Daten gespeichert und dem Benutzer zur Verfügung gestellt werden, ohne dass die Gefahr besteht, dass die Daten von dem Benutzer gestohlen oder manipuliert werden.

Desweiteren ist denkbar, dass das Sicherheitsgehäuse im geschlossenen Zustand einen Ein-/Ausschalter des Computers verdeckt. Vorzugsweise sollten ein Kopfhöreranschluss, Lautsprecher und möglichst auch Lautstärkebedienknöpfe im geschlossenen Zustand nicht verdeckt sein, sondern für den Benutzer frei zugänglich sein.

Das Sicherheitsgehäuse kann einen mechanischen Schutz, einen Hitzeschutz und/oder einen Feuchtigkeitsschutz für den Computer bilden.

Vorzugsweise ist das Sicherheitsgehäuse dreiteilig mit einer unteren Schale und zwei oberen Abdeckungen ausgebildet. Die untere Schale weist eine Aufnahme für den Computer und eine weitere Aufnahme für das elektrische Kabel auf. Die erste obere Abdeckung bildet eine Abdeckung für die untere Schale und ist mit dieser verbindbar, um den Computer abzudecken. Die zweite obere Abdeckung bildet ebenfalls eine Abdeckung für die untere Schale und ist mit dieser verbindbar, um die Kabelaufnahme zu verschließen. Vorzugsweise ist die erste obere Abdeckung nur bei entfernter zweiter oberer Abdeckung abnehmbar, wobei die zweite obere Abdeckung an der unteren Schale verriegelbar und im verriegelten Zustand abschließbar ist. Zum Öffnen des Sicherheitsgehäuses wird dann zunächst die zweite obere Abdeckung entfernt und der Zugriff auf das elektrische Kabel ermöglicht, bevor die erste obere Abdeckung abgenommen werden kann, um den Zugriff auf den Computer zu ermöglichen.

Im Folgenden werden anhand der Figuren zwei Ausführungsbeispiele der Erfindung näher erläutert. Es zeigen:
- Fig. 1: eine Explosionsdarstellung eines ersten Ausführungsbeispiels des erfindungsgemäßen Sicherheitsgehäuses und eines tragbaren Computers,
- Fig. 2: eine perspektivische Draufsicht auf das Sicherheitsgehäuse gemäß Fig. 1 im geschlossenen Zustand,
- Fig. 3: eine perspektivische Untersicht des Gehäuses gemäß Fig. 1 im geschlossenen Zustand,
- Fig. 4: eine erste Seitenansicht des Sicherheitsgehäuses gemäß Fig. 2,
- Fig. 5: eine zweite Seitenansicht des Sicherheitsgehäuses gemäß Fig. 2,
- Fig. 6: eine dritte Seitenansicht des Sicherheitsgehäuses,
- Fig. 7: eine Draufsicht auf die untere Schale eines zweiten Ausführungsbeispiels und
- Fig. 8: eine Draufsicht auf die obere Abdeckung des zweiten Ausführungsbeispiels.

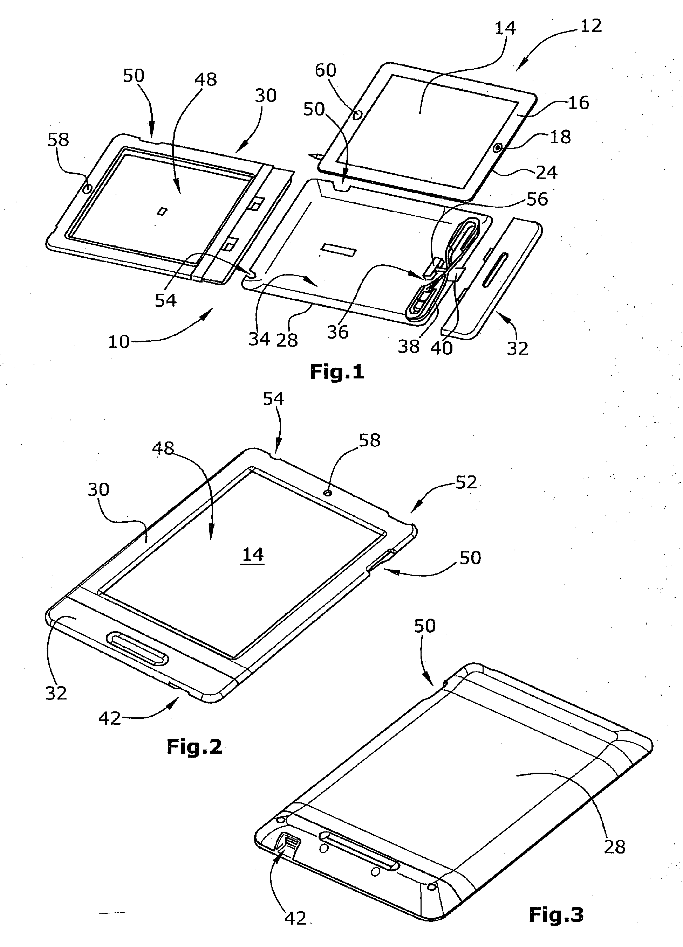

Das Sicherheitsgehäuse 10 dient zur Aufnahme des in Fig. 1 dargestellten tragbaren Computers 12 in Form eines iPads oder eines anderen Tablet-Computers. Der Computer 12 weist einen Bildschirm 14 in Form eines berührungsempfindlichen Touchscreens und ein Gehäuse 16 auf. Das Computergehäuse 16 ist mit Bedientasten 18, 20, 22 zur Bedienung des Computers versehen. Die Bedientaste 18 ist hierbei ein Hauptbedienknopf, mit dessen Hilfe ein Zugriff auf Menüs zur Vornahme und Veränderung von Einstellungen des Computers möglich ist. Die Bedientaste 20 ist ein Ein-/Ausschalter. Die Bedientaste 22 ist ein Lautstärkebedienknopf. Das Computer-gehäuse weist zudem eine Steckbuchse 24 auf, die zur Spannungsversorgung und zur Datenübertragung nach dem USB-Standard ausgebildet ist. Desweiteren ist ein Kopfhöreranschluss 26 vorgesehen.

Das Sicherheitsgehäuse 10 besteht aus einer unteren Schale 28, einer ersten oberen Abdeckung 30 und einer zweiten oberen Abdeckung 32. Die untere Schale 28 ist mit einer Aufnahme 34 für den Computer und mit einer Aufnahme 36 für ein elektrisches Kabel 38 versehen.

Die untere Schale 28 ist im Bereich der Aufnahme 34 passgenau an die äußere Form des rückwärtigen Gehäuses 16 des Computers 12 ausgebildet. Der Computer 12 wird bei Einsetzen in die Aufnahme 34 vollständig und passgenau von der unteren Schale 28 aufgenommen. Mit Schraubverbindungen kann der Computer 12 mit der unteren Schale 28 verschraubt werden. Im in die Aufnahme 34 eingesetzten Zustand des Computers 12 kann die erste obere Abdeckung 30 auf die untere Schale 28 derart aufgesetzt und an der unteren Schale 28 befestigt werden, dass die Aufnahme 34 für den Computer bis auf den Bereich des Bildschirms 14 vollständig von der ersten oberen Abdeckung verdeckt wird. Die Aufnahme 36 für das Kabel 38 ist dann noch frei zugänglich. Zum Verschließen der Kabelaufnahme 36 wird die zweite obere Abdeckung 32 auf die untere Schale 28 aufgesetzt und durch Steckverbindungen mit der ersten oberen Abdeckung 30 und mit der unteren Schale 28 verbunden. Die Kabelabdeckung 32 ist abschließbar und kann im verschlossenen Zustand nicht entfernt werden und gibt auch die erste obere Abdeckung 30 nicht frei. Der Schlüssel zum Öffnen der Verriegelung zwischen der Kabelabdeckung 32 und der unteren Schale 28 kann beispielsweise nach Verleihen des Computers an einen Flugpassagier von dem Flugbegleitpersonal aufbewahrt werden.

Das elektrische Kabel 38 ist mit einem elektrischen Steckkontakt 40 versehen, der an der unteren Schale 28 lösbar befestigt ist. Im an der unteren Schale 28 befestigten Zustand liegt der Steckkontakt 40 in einer Ausnehmung 42 des Sicherheitsgehäuses 10 frei und ist dadurch von außerhalb des Sicherheitsgehäuses 10 frei zugänglich. Das dem Steckkontakt 40 gegenüberliegende Ende des elektrischen Kabels 38 ist zur Verbindung mit der Steckbuchse 24 des Computers 12 mit einer Kontaktbuchse 56 versehen. Das elektrische Kabel 38 ermöglicht ausschließlich eine Spannungsversorgung des Computers 12, während eine Datenübertragung verhindert ist. Über das elektrische Kabel 38 und den Steckkontakt 40 kann somit nur eine Spannungsversorgung hergestellt werden und elektronische Daten können weder von dem Computer 12 heruntergeladen werden, noch auf den Computer 12 von außen übertragen werden. Ein Zugriff auf die auf dem Computer 12 gespeicherten Daten ist über den elektrischen Steckkontakt 40 nicht möglich.

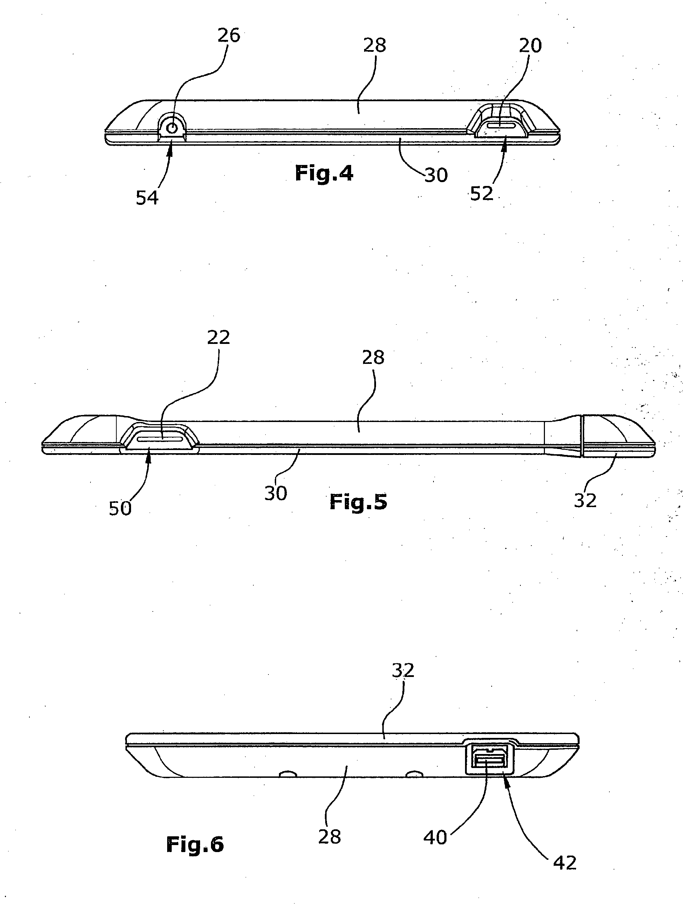

In ähnlicher Weise werden in dem in den Figuren 2 bis 6 gezeigten geschlossenen Zustand des Sicherheitsgehäuses 10 der Ein-/Ausschalter 20, der Lautstärkebedienknopf 22 und der Kopfhöreranschluss 26 jeweils durch eine Aussparung in dem Sicherheitsgehäuse 10 freigegeben und sind dadurch von außen frei zugänglich. Der Bildschirm ist zur Bedienung durch die Aussparung 48 in der Computerabdeckung 30 hindurch frei zugänglich.

Das Sicherheitsgehäuse 10 ist mit einer in den Figuren nicht dargestellten Klapphalterung versehen, die ein sicheres Aufstellen des Computers 12 ermöglicht. So kann der Computer beispielsweise von einem Fluggast auf einen meist an der Rückenlehne des jeweils vorderen Sitzes angebrachten Klapptisch aufgestellt werden.

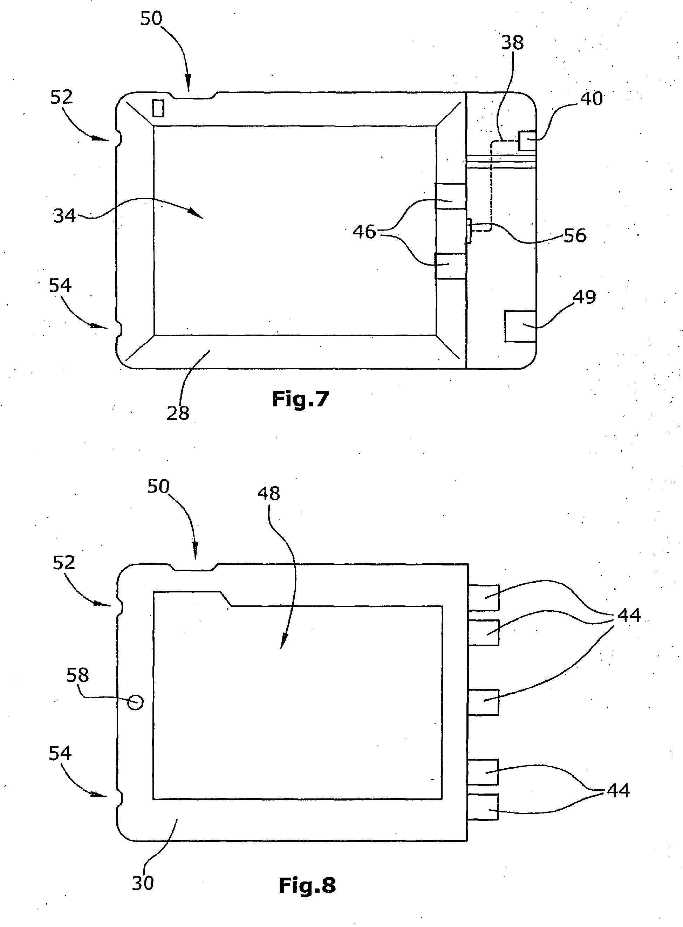

Das zweite Ausführungsbeispiel, welches in den Figuren 7 und 8 dargestellt ist, unterscheidet sich von dem ersten Ausführungsbeispiel gemäß den Figuren 1 bis 6 dadurch, dass das Sicherheitsgehäuse 10 nicht dreiteilig, sondern lediglich zweiteilig ist, wobei die zweite obere Abdeckung 32 für das Kabel 38 und für den Steckkontakt 40 integraler Bestandteil der unteren Schale 28 ist und mit dieser einstückig und fest verbunden ist. Die untere Schale 28 weist im Übrigen, wie im Falle des ersten Ausführungsbeispiels, eine Aufnahme 34 für den Computer 12 auf, wobei die erste obere Abdeckung 30 auf die untere Schale 28 derart aufgesetzt und an der unteren Schale 28 befestigt werden kann, dass die Aufnahme 34 für den Computer von der ersten oberen Abdeckung bedeckt wird. Die obere Abdeckung 30 ist hierzu mit Fixierlaschen 44 versehen, die mit Fixierlaschen 46 an der unteren Schale 28 zusammengreifen, um die Abdeckung 30 an der unteren Schale 28 zu halten und zu fixieren. Die untere Schale 28 ist mit einem Schloss 49 versehen, um die obere Abdeckung 30 im geschlossenen Zustand abzuschließen, so dass die Abdeckung 30 im verschlossenen Zustand nicht von der unteren Schale 28 entfernt werden kann.

Auch die Computerabdeckung 30 des zweiten Ausführungsbeispiels ist mit einer Aussparung 48 für den Computerbildschirm versehen, um den Bildschirm als Touchscreen im geschlossenen Zustand des Sicherheitsgehäuses 10 bedienen zu können. Desweiteren sind die Unterschale 28 und die Computerabdeckung 30 jeweils mit einer Aussparung 50 für einen Lautstärkeregler des Computers, einer Aussparung 52 für den Ein-/Ausschalter des Computers und mit einer Aussparung 54 für den Kopfhöreranschluss des Computers versehen. Diese Elemente entsprechen in ihrer Anordnung und Funktion denen des ersten Ausführungsbeispiels.

Ebenfalls ist die untere Schale mit einem Steckkontakt 40 und einem elektrischen Kabel 38 wie im Falle des ersten Ausführungsbeispiels versehen. Der einzige Unterschied zu dem ersten Ausführungsbeispiel besteht lediglich darin, dass das Kabel 38 kürzer ist und zusammen mit einer elektrischen Kontaktbuchse 56 für die Computer-Steckbuchse 24 fest mit der unteren Schale 28 verbunden ist, während das Kabel 38 und die Kontaktbuchse 56 gemäß Fig. 1 herausnehmbar gestaltet und dort in einem aufgewickelten Zustand gezeigt sind.

Die Computerabdeckung 30 ist wie im Fall des ersten Ausführungsbeispiels mit einer Öffnung 58 für einen Lichtsensor 60 des Computers 12 versehen. Im geschlossenen Zustand des Sicherheitsgehäuses 10 kann der Computer 12 mit seinem Lichtsensor 60 auch durch die Öffnung 58 hindurch ausreichend Licht empfangen, um beispielsweise eine an Außenlichtverhältnisse angepasste Beleuchtung des Bildschirms 14 einzustellen.

## Patentansprüche

1. Sicherheitsgehäuse (10) für einen tragbaren Computer (12), der einen Bildschirm (14), Bedientasten (18, 20, 22) und mindestens eine Steckbuchse (24) aufweist, wobei das Sicherheitsgehäuse (10) von einem geöffneten Zustand in einen geschlossenen Zustand überführbar ist, in dem das Gehäuse (10) abschließbar ist, um mindestens eine Bedientaste (18) des Computers zu verdecken und den Bildschirm (14) durch eine Aussparung (48) in dem Gehäuse (10) freizugeben
**dadurch gekennzeichnet,**
**dass** das Sicherheitsgehäuse einen von außerhalb des Gehäuses (10) zugänglichen elektrischen Steckkontakt (40) mit einem elektrischen Kabel (38) aufweist, welches mit der Steckbuchse (24) des Computers verbindbar ist.

2. Sicherheitsgehäuse nach Anspruch 1, **dadurch gekennzeichnet, dass** das Kabel (38) und der Steckkontakt (40) im geschlossenen Zustand des Gehäuses (10) vollständig in dem Gehäuse enthalten sind.

3. Sicherheitsgehäuse nach Anspruch 2, **dadurch gekennzeichnet, dass** das Kabel (38) zu einer Spannungsversorgung des Computers ausgebildet ist und keine Datenleitung bildet.

4. Sicherheitsgehäuse nach einem der vorhergehenden Ansprüche , **dadurch gekennzeichnet, dass** das Sicherheitsgehäuse (10) einen mechanischen Schutz, einen Hitzeschutz und/oder einen Feuchtigkeitsschutz bildet.

5. Sicherheitsgehäuse nach einem der vorhergehenden Ansprüche, **dadurch gekennzeichnet, dass** das Sicherheitsgehäuse (10) dreiteilig mit einer unteren Schale (28), die eine Aufnahme (34) für den Computer und eine Aufnahme (36) für das Kabel (38) aufweist, einer ersten oberen Abdeckung (30) für den Computer und einer zweiten oberen Abdeckung (32) für das Kabel ist.

6. Sicherheitsgehäuse nach Anspruch 5, **dadurch gekennzeichnet, dass** die erste obere Abdeckung (30) nur bei entfernter zweiter oberer Abdeckung (32) abnehmbar ist, wobei die zweite obere Abdeckung im geschlossenen Zustand verriegel- und abschließbar ist.

7. Sicherheitsgehäuse nach einem der vorhergehenden Ansprüche, **dadurch gekennzeichnet, dass** das Sicherheitsgehäuse (10) zweiteilig mit einer unteren Schale (28), die eine Aufnahme (34) für den Computer und eine Aufnahme (36) für das Kabel (38) aufweist, und einer oberen Abdeckung (30) für den Computer ist, wobei die untere Schale (28) eine die Kabelaufnahme (36) vollständig bedeckende und fest mit der Schale (28) verbundene Abdeckung (32) aufweist.

8. Kombination aus einem tragbaren Computer (12), der einen Bildschirm, Bedientasten und mindestens eine Steckbuchse (24) aufweist, und einem Sicherheitsgehäuse (10) nach einem der vorhergehenden Ansprüche, wobei der Computer (12) ferner einen Hauptbedienknopf (18) aufweist, der zur Vornahme von Grundeinstellungen vorgesehen ist, und wobei das Sicherheitsgehäuse (10) den Hauptbedienknopf (18) im geschlossenen Zustand derart verdeckt, dass ein Betätigen des Hauptbedienknopfs verhindert ist.

9. Kombination nach Anspruch 8, **dadurch gekennzeichnet, dass** der Computer einen von dem Sicherheitsgehäuse im geschlossenen Zustand verdeckten Ein-/Ausschalter (20) aufweist.

10. Kombination nach einem der vorhergehenden Ansprüche, **dadurch gekennzeichnet, dass** der Bildschirm (14) ein Touchscreen ist, der im geschlossenen Zustand des Sicherheitsgehäuses (10) betätigbar ist.

11. Kombination nach einem der vorhergehenden Ansprüche, **dadurch gekennzeichnet, dass** der Computer (12) einen Kopfhöreranschluss (26) und vorzugsweise Lautstärkebedienknöpfe (22) aufweist, welche im geschlossenen Zustand des Sicherheitsgehäuses (10) von außen zugänglich sind.

## Claims

1. A secure housing (10) for a portable computer (12), which has a screen (14), operating keys (18, 20, 22) and at least one socket (24), said secure housing (10) being adapted to be transferred from an open state to a closed state in which the housing (10) can be locked so as to cover at least one operating key (18) of the computer and expose the screen (14) through a cutout (48) in the housing (10),
**characterized in that**
the secure housing comprises an electric plug contact (40), which is accessible from outside the housing (10), said contact comprising an electric wire (38) adapted to be connected with the socket (24) of the computer.

2. The secure housing of claim 1, **characterized in that** the wire (38) and the plug contact (40) are completely included within the housing when the housing (10) is in the closed state.

3. The secure housing of claim 2, **characterized in that** the wire (38) is configured as a voltage supply means to the computer and does not form a data line.

4. The secure housing of one of the preceding claims, **characterized in that** the secure housing (10) provides mechanical protection, heat protection and/or moisture protection.

5. The secure housing of one of the preceding claims, **characterized in that** the secure housing (10) is of a three-part structure comprising a lower shell (28) with a holder (34) for the computer and a holder (36) for the wire (38), a first upper cover (30) for the computer and a second upper cover (32) for the wire.

6. The secure housing of claim 5, **characterized in that** the first upper cover (30) is removable only when the second upper cover (32) has been removed, the second upper cover being adapted to be latched and locked in the closed state.

7. The secure housing of one of the preceding claims, **characterized in that** the secure housing (10) is of a two-part structure comprising a lower shell (28) with a holder (34) for the computer and a holder (36) for the wire (38), and an upper cover (30) for the computer, the lower shell (28) comprising a cover (32) completely covering the wire holder (36) and fixedly connected with the shell (28).

8. A combination of a portable computer (12) comprising a screen, operating keys, at least one socket (24), and of a secure housing (10) according to one of the preceding claims, the computer (12) having a main operating button (18) provided for making basic settings, and wherein in the closed state, the secure housing (10) covers the main operating button (18) such that an operation of the main operating button is prevented.

9. The combination of claim 8, **characterized in that** the computer has an on/off switch (20) covered by the secure housing in the closed state.

10. The combination of one of the preceding claims, **characterized in that** the screen (14) is a touchscreen that can be operated in the closed state of the secure housing (10).

11. The combination of one of the preceding claims, **characterized in that** the computer (12) has a headphone connector (26) and preferably volume controls (22) which are accessible from outside in the closed state of the secure housing (10).

## Revendications

1. Boîtier de sécurité (10) pour un ordinateur portable (12) comprenant un écran (14), des touches de commande (18, 20, 22) et au moins une prise femelle (24), le boîtier de sécurité (10) étant transformable d'un état ouvert en un état fermé dans lequel le boîtier (10) peut être verrouillé, afin de couvrir au moins une touche de commande (18) de l'ordinateur et de laisser l'écran (14) libre par un évidement (48) du boîtier (10),
**caractérisé en ce que**
le boîtier de sécurité comporte un contact électrique enfichable (40) accessible de l'extérieur du boîtier (10), avec un câble électrique (38) adapté pour pouvoir être relié à la prise femelle (24) de l'ordinateur.

2. Boîtier de sécurité selon la revendication 1, **caractérisé en ce que**, en l'état fermé du boîtier (10), le câble (38) et le contact enfichable (40) sont entièrement contenu dans le boîtier.

3. Boîtier de sécurité selon la revendication 2, **caractérisé en ce que** le câble (38) est formé pour l'alimentation en électricité de l'ordinateur et ne forme pas de câble de données.

4. Boîtier de sécurité selon l'une des revendications précédentes, **caractérisé en ce que** le boîtier de sécurité (10) forme une protection mécanique, une protection thermique et/ou une protection contre l'humidité.

5. Boîtier de sécurité selon l'une des revendications précédentes, **caractérisé en ce que** le boîtier de sécurité (10) est en trois parties avec une coque inférieure (28) comportant une réception (34) pour l'ordinateur et une réception (36) pour le câble (38), un premier cache supérieur (30) pour l'ordinateur et un second cache supérieur (32) pour le câble.

6. Boîtier de sécurité selon la revendication 5, **caractérisé en ce que** le premier cache supérieur (30) ne peut être enlevé que lorsque le second cache supérieur (32) est enlevé, le second cache supérieur pouvant être verrouillé et fermé à clé.

7. Boîtier de sécurité selon l'une des revendications précédentes, **caractérisé en ce que** le boîtier de sécurité (10) est en deux parties avec une coque inférieure (28) comportant une réception (34) pour l'ordinateur et une réception (36) pour le câble (38), et un cache supérieur (30) pour l'ordinateur, la coque inférieure (28) comportant un cache (32) rigidement attaché à la coque (28) et couvrant entièrement la réception (36) pour le câble.

8. Combinaison d'un ordinateur portable (12) comprenant un écran, des touches de commande et au moins une prise femelle (24), et d'un boîtier de sécurité (10) selon l'une des revendications précédentes, l'ordinateur (12) comprenant en outre un bouton de commande principal (18) destiné à des réglages de base et, en état fermé, le boîtier de sécurité (10) couvrant le bouton de commande principal (18) de façon qu'un actionnement du bouton de commande est empêché.

9. Combinaison selon la revendication 8, **caractérisé en ce que** l'ordinateur comprend un commutateur marche/arrêt (20) couvert par le boîtier de sécurité en état fermé.

10. Combinaison selon l'une des revendications précédentes, **caractérisé en ce que** l'écran (14) est un écran tactile pouvant être actionné en l'état fermé du boîtier de sécurité (10).

11. Combinaison selon l'une des revendications précédentes, **caractérisé en ce que** l'ordinateur (12) comprend une prise (26) pour écouteurs et de préférence des boutons (22) de réglage de volume qui sont accessible de l'extérieur en l'état fermé du boîtier de sécurité (10).
